# EUROPÄISCHE PATENTSCHRIFT

(11) **EP 2 801 305 B1**
(45) Veröffentlichungstag und Bekanntmachung des Hinweises auf die Patenterteilung: **19.04.2017**
(21) Anmeldenummer: 14167549.6
(22) Anmeldetag: 08.05.2014
(51) Int. Cl.: A47J 31/44

(54) **Kaffeemaschine mit "One Touch"-Bedienkonzept**
Coffee machine with one touch control concept
Machine à café dotée du concept de fonctionnement «One Touch»

(30) Priorität: 08.05.2013 DE 102013208469; 26.03.2014 DE 102014205684
(43) Veröffentlichungstag der Anmeldung: 12.11.2014
(73) Patentinhaber: BSH Hausgeräte GmbH, 81739 München (DE)
(72) Erfinder: Haas, Michael, 88279 Amtzell (DE); Quandt, Christian, 83301 Traunreut (DE); Schuster, Alexander, 83376 Truchtlaching (DE); Vydrenko, Andrej, 83308 Trostberg (DE)

(56) Entgegenhaltungen:
- EP-A1- 2 392 240
- EP-A1- 2 570 059
- WO-A1-2004/023950
- WO-A1-2006/052257
- WO-A1-2012/108762
- FR-A1- 2 879 426

## Beschreibung

Die Erfindung betrifft eine Heißgetränkezubereitungseinrichtung für Haushaltszwecke, insbesondere einen Kaffeevollautomaten, zur Zubereitung und Ausgabe unterschiedlicher Getränkearten, mit einer in Betrieb einem Benutzer zugewandten Frontfläche, mit einem Getränkeauslass an der Frontfläche zur Abgabe zumindest einer Getränkekomponente und mit einer einzigen Tassenaufstellfläche unter dem Getränkeauslass.

Vor allem Kaffeevollautomaten bieten die Möglichkeit der Zubereitung unterschiedlicher Getränkearten, die regelmäßig Kaffee als eine ihrer Getränkekomponenten umfassen. Zu den unterschiedlichen Getränkearten können daher sowohl Kaffee oder Espresso an sich als auch Mischgetränke unter Verwendung von Kaffee oder Espresso zählen, beispielsweise Latte Macchiato oder Cappuccino. Als weitere Getränkekomponenten kommen in der Regel Milch und heißes Wasser zum Einsatz. Der Bedienungskomfort derartiger Heißgetränkezubereitungseinrichtungen kann darunter leiden, dass dem Benutzer für die Zubereitung eines Getränks eine Mehrzahl an Bedienungsschritten abverlangt wird. Dazu kann es gehören, die den erforderlichen Getränkekomponenten zugeordneten Getränkeauslässe auf ein geeignetes Getränkegefäß nach Höhe und Richtung einzustellen. Bedienungsfehler können im Verspritzen von Getränk bei der Zubereitung oder im Überlaufen des Getränkegefäßes resultieren.

Die DE 10 2006 043 903 A1 beispielsweise offenbart eine Heißgetränkezubereitungseinrichtung, die einen vertikal verschiebbaren und zwischen zwei Positionen horizontal verstellbaren Getränkeauslauf offenbart. In einer ersten Position lassen sich Kaffee und Espresso zubereiten, die zweite Position ist für die Zubereitung von Latte Macchiato und Cappuccino gedacht. Den beiden Positionen ist jeweils eine andere Tassenaufstellfläche zugeordnet, die in unterschiedlichen Höhen zueinander fest angebracht sind. Je nach gewählter Position des Getränkeauslaufs wird dem Benutzer durch den Abstand zwischen dem Getränkeauslauf einerseits und der jeweiligen Tassenaufstellfläche die Auswahl eines geeigneten Getränkgefäßes nahegelegt.

Die WO 2004/023950 A1 offenbart eine Abgabevorrichtung für Getränke, insbesondere für Kaffe und/oder Milch, die eine Zuführeinrichtung zum Zuführen von mindestens zwei verschiedenen Heißgetränken, Fülleinrichtungen zum Abfüllen der Heissgetränke in mindestens ein Geschirr und Ventileinrichtungen umfasst. Durch eine Schiebereinrichtung, die vorzugsweise in Form von drehbaren Bahnscheiben ausgebildet ist, kann die Anzahl und Größe von "Totstellen", die einem durch Spülen unzugänglich sind, vermindert werden.

Aufgabe der vorliegenden Erfindung ist es, die Bedienung einer Heißgetränkezubereitungseinrichtung weiter zu vereinfachen.

Diese Aufgabe wird bei einer Heißgetränkezubereitungseinrichtung der eingangs genannten Art erfindungsgemäß dadurch gelöst, dass der Getränkeauslass mindestens zwei Getränkeausläufe umfasst, die jeweils unterschiedlichen Getränken zugeordnet sind. Der Getränkeauslass ist zudem über der Tassenaufstellfläche zwischen mindestens zwei Positionen um eine horizontale, senkrecht zur Frontfläche verlaufende Achse verdrehbar. Dabei sind sowohl die unterschiedlichen Positionen des Getränkeauslasses als auch die unterschiedlichen Getränkeausläufe eindeutig der Ausgabe jeweils unterschiedlicher Getränkearten zugeordnet. Dass der Getränkeauslass zwei einzelne Getränkeausläufe umfasst, um zwei Tassen mit derselben Getränkeart gleichzeitig zu befüllen, ist an sich aus dem Stand der Technik bekannt. Erfindungsgemäß dagegen sind mindestens zwei unterschiedliche Getränkeausläufe auch der Ausgabe unterschiedlicher Getränke zugeordnet. Dies schließt nicht aus, dass die Getränkeausläufe beispielsweise jeweils paarweise einer Getränkeart zugeordnet sind, bei der ein Paar an Getränkeauslässen für eine erste Getränkesorte, beispielsweise Espresso, und ein weiteres Paar an Getränkeauslässen für eine andere Sorte, beispielsweise Kaffee, angeordnet ist. Mit den paarweise angeordneten Getränkeausläufen können entweder dieselbe Tasse oder zwei verschiedene Tassen gleichzeitig befüllt werden. Entscheidend ist jedenfalls, dass am Getränkeauslass unterschiedliche Getränkeausläufe angeordnet sind und der Getränkeauslass in mindestens zwei Positionen über der Tassenaufstellfläche verdrehbar ist, wobei in jeder Position ein anderer Getränkeauslauf aktivierbar und jede Position einer anderen Getränkeart zugeordnet ist. So kann beispielsweise eine erste Position des Getränkeauslasses der Zubereitung von Espresso zugeordnet sein, wobei dieser ersten Position ein erster Getränkeauslauf zur Getränkeausgabe aktivierbar ist. Wird nun eine andere Getränkeart, beispielsweise Kaffee, gewählt, so lässt sich der Getränkeauslass in die zweite Position verbringen, in der ein vom ersten Getränkeauslauf verschiedener zweiter Getränkeauslauf für die Abgabe des Kaffeegetränkes aktivierbar ist.

Durch die Verdrehbarkeit des Getränkeauslasses in unterschiedlichen Positionen und in Abhängigkeit davon, welche Getränkeart gewählt wird, kann dem Benutzer vorteilhaft die Zubereitung unterschiedlicher Getränkearten bewusst gemacht werden. Denn jede Getränkeart ist einer anderen Position des Getränkeauslasses zugeordnet. Damit lässt sich die Aufmerksamkeit des Benutzers noch stärker auf die ausgewählte Getränkeart richten und ihn das korrekte Getränkegefäß zur Aufnahme des angeforderten Getränks auswählen und bereitstellen.

In den beiden beispielhaften Zubereitungspositionen ist der Getränkeauslass bzw. sind der erste und zweite Getränkeauslass auf dieselbe Tassenaufstellfläche gerichtet, so dass das zu befüllende Getränkegefäß weitgehend an derselben Stelle auf der Tassenaufstellfläche zu positionieren ist. Damit kann die Tassenaufstellfläche mit den geringen Abmessungen dimensioniert sein, die für das Abstellen eines Getränkegefäßes erforderlich sind. Dadurch kann die Heißgetränkezubereitungseinrichtung insgesamt sehr kompakt dimensioniert werden.

Nach einer vorteilhaften Ausgestaltung der Erfindung kann der Getränkeauslass oder die Frontfläche über Markierungen verfügen, die diejenige Getränkeart eindeutig symbolisieren, die der gewählten Position des Getränkeauslasses jeweils zugeordnet ist. Dadurch lässt sich dem Benutzer der Zubereitungseinrichtung der eindeutige Zusammenhang zwischen der gewählten oder der erforderlichen Position des Getränkeauslasses vermitteln, um eine bestimmte Getränkeart zuzubereiten. Die Markierung kann beispielsweise in einem Piktogramm für die jeweilige Getränkeart, in einem sonstigen Symbol oder einer Beschriftung wie "Kaffee", "Espresso" etc. oder einer beliebigen Kombination aus diesen Möglichkeiten bestehen.

Der erfindungsgemäße Getränkeauslass lässt sich in unterschiedliche Positionen für die Ausgabe jeweils zugeordneter unterschiedlicher Getränke auf dieselbe Tassenaufstellfläche richten. Der Getränkeauslass ist rotatorisch verstellbar. Um einen aktivierbaren Getränkeauslauf optisch möglichst eindeutig der entsprechenden Position des Getränkeauslasses zuordnen zu können, ist eine möglichst weit voneinander entfernte Anordnung der unterschiedlichen Getränkeausläufe wünschenswert. Erfindungsgemäß ist daher der Getränkeauslass um eine horizontale, senkrecht zur Frontfläche verlaufende Achse verdrehbar ausgebitdet. Bei einer Verdrehbarkeit des Getränkeauslasses beispielsweise um 360° und vier unterschiedlichen Positionen zur Ausgabe vier unterschiedlicher Getränkearten lassen sich damit die benachbarten Positionen und die ihnen zugeordneten Getränkeausläufe in einem Winkel von jeweils 90° zueinander anordnen. Eine Verdrehung des Getränkeauslasses um 90° für den Wechsel zwischen zwei Positionen reicht aus, um die eine oder die andere Position verwechslungsfrei auszuwählen. Sollte der Getränkeauslass dagegen beispielsweise nur um 180° verdreht werden können, bliebe zwischen zwei benachbarten Positionen nur noch ein Winkel von 45°, der evtl. eine weniger deutliche Unterscheidung der Positionen erlaubt. Sie kann durch eine zusätzliche Rasterung erleichtert werden, sodass sich jede Position mit einem hörbaren und/oder fühlbaren "Klack" bemerkbar macht.

Die Getränkeart "Espresso" wird in der Regel in einer geringen Menge zubereitet und in kleinen Tassen genossen. "Latte Macchiato" dagegen erfordert ein größeres Gefäßvolumen. Nach einer weiteren vorteilhaften Ausgestaltung der Erfindung kann die Heißgetränkezubereitungseinrichtung daher über Mittel zum benutzerseitigen Einstellen unterschiedlicher Abstände der Getränkeausläufe von der Tassenaufstellfläche in den unterschiedlichen Positionen des Getränkeauslasses verfügen. Diejenige Position des Getränkeauslasses, die der Ausgabe von "Espresso" zugeordnet ist, kann demzufolge den geringsten Abstand aufweisen, wohingegen diejenige Position, in der der Benutzer die Ausgabe von "Latte Macchiato" erwartet, den größten Abstand annimmt. Die Mittel zum Einstellen unterschiedlicher Abstände können in herkömmlicher Weise auf einer benutzerseitigen Verstellbarkeit der Tassenaufstellfläche beruhen. Je nach gewählter Getränkeart und der dafür erforderlichen Position des Getränkeauslaufs ist dann gegebenenfalls auch die Höhe der Tassenaufstellfläche anzupassen.

Alternativ oder zusätzlich dazu können in einer vorteilhaften Weiterbildung der Erfindung die Mittel zum Einstellen der unterschiedlichen Abstände auch durch die Verstellbarkeit des Getränkeauslasses selbst ausgebildet sein. Dazu brauchen sich die Getränkeausläufe lediglich in unterschiedlichen Höhen zu befinden, wenn sie in ihre jeweilige Position zur Getränkeabgabe verbracht sind. Die unterschiedlichen Positionen des Getränkeauslasses unterscheiden sich dann nicht nur hinsichtlich des zugeordneten Getränks, sondern auch hinsichtlich der Höhenlage des jeweiligen aktivierbaren Getränkeauslaufs relativ zur Tassenaufstellfläche. Bei einem verschiebbaren Getränkeauslass beispielsweise können die Getränkeausläufe dazu in unterschiedlichen Höhen an dem horizontal verschiebbaren Getränkeauslass angebracht sein. Alternativ oder zusätzlich kann eine Höhendiversifizierung der Getränkeausläufe dadurch erreicht werden, dass der Getränkeauslass selbst nicht auf einer horizontalen, sondern auf einer schräg aufwärts bzw. abwärts gerichteten Bahn in die jeweiligen Positionen verschiebbar ist. Einer auf der schräg verlaufenden Bahn oberen Position des Getränkeauslasses kann dann die Zubereitung eines Latte Macchiato zugeordnet sein, einer unteren Position die Zubereitung eines Espresso. Bei der Bedienung der erfindungsgemäßen Heißgetränkezubereitungseinrichtung fallen damit vorteilhafterweise die Auswahl der Getränkeart und die Einstellung des erforderlichen oder geeigneten Abstands des Getränkeauslaufs von der Tassenaufstellfläche in einem Bedienungsschritt zusammen. Damit erleichtert sich die Bedienung der Zubereitungseinrichtung.

Die Verstellbarkeit des Getränkeauslasses besteht - wie oben bereits erläutert - in einem Verdrehen um eine horizontale Achse. Nach einer weiteren vorteilhaften Ausgestaltung der Erfindung kann eine derart ausgebildete Heißgetränkezubereitungseinrichtung einen exzentrisch gelagerten Getränkeauslass aufweisen. Ein derartiger Getränkeauslass kann bezüglich seines geometrischen Schwerpunkts punktsymmetrisch, beispielsweise sternförmig oder kreisrund mit umfangseitig angeordneten Getränkeausläufen ausgebildet sein. Mit einer gegenüber seinem geometrischen Schwerpunkt exzentrischen Lagerung kann er dann in seinen unterschiedlichen Positionen unterschiedliche Abstände seines Umfangs bzw. seiner Getränkeausläufe gegenüber der Tassenaufstellfläche erzeugen. Denn aufgrund der Exzentrizität seiner Achse, um die sich der Getränkeauslass drehen lässt, können die unterschiedlichen Getränkeausläufe jeweils einen anderen radialen Abstand zur Drehachse aufweisen, die ihrerseits selbstverständlich immer denselben Abstand gegenüber der Tassenaufstellfläche einhält. Damit variiert in den unterschiedlichen Positionen auch der Abstand der Getränkeauslässe zur Tassenaufstellfläche. So lässt sich auch bei einem um eine horizontale Achse verdrehbaren Getränkeauslass zugleich mit der Auswahl der Getränkeart eine Höhenanpassung vornehmen.

Alternativ oder zusätzlich kann die oben genannte Heißgetränkezubereitungseinrichtung mit einem drehbar gelagerten Getränkeauslass dadurch weitergebildet sein, dass der Getränkeauslass selbst unrund ausgebildet ist. Dies bedeutet, dass sein Umfang unterschiedliche Radien gegenüber deren Achse aufweist, so dass die umfangseitig angeordneten Getränkeausläufe auch daher unterschiedliche axiale Abstände zum Drehpunkt des Getränkeauslaufs einnehmen können. Auch dadurch lassen sich unterschiedliche Abstände der Getränkeausläufe gegenüber der Tassenaufstellfläche generieren.

Durch Kombination beider Varianten, also durch Kombination der exzentrischen Lagerung und der unrunden Ausbildung zu einem exzentrisch gelagerten, unrund ausgebildeten Getränkeauslass lassen sich maximale Unterschiede in den Abständen der Getränkeausläufe gegenüber der Tassenaufstellfläche erreichen. Zugleich lassen sich dadurch vorteilhafte kompakte Abmessungen der Heißgetränkezubereitungseinrichtung erzielen.

Nach einer weiteren vorteilhaften Ausgestaltung der Erfindung umfasst sie einen Getränkeauslauf für Espresso, einen weiteren Getränkeauslauf für Kaffee und wiederum einen weiteren Getränkeauslauf für Latte Macchiato am Getränkeauslass. Damit weist die Heißgetränkezubereitungseinrichtung jeweils einen Getränkeauslauf und folglich auch jeweils eine Position für die drei am meisten gewählten Getränke auf. Grundsätzlich kann sie über einen oder mehrere weitere Getränkeausläufe und entsprechende eine oder mehrere weitere Positionen verfügen. Weist sie jedoch nur genau drei Ausläufe bzw. Positionen für diese oder andere Getränkearten auf, so lassen sich die Wahlmöglichkeiten für den Benutzer nicht nur leicht überblicken lassen, sondern sich auch schnelle Wechsel von jedem Getränk zu einem jeweils anderen Getränk vornehmen. Denn bei nur drei Ausläufen bzw. drei Positionen sind die beiden jeweils verbleibenden anderen Ausläufe bzw. Positionen zumindest bei zirkulärer Anordnung unmittelbar benachbart angeordnet. Dies dient wiederum einer schnellen und damit bequemen Bedienung der Heißgetränkezubereitungseinrichtung.

Heißgetränkezubereitungseinrichtungen verfügen in der Regel über eine Getränkewahlvorrichtung zur Auswahl einer Getränkeart von mehreren angebotenen Getränkearten. Sie ermöglicht es einem Benutzer, per Bedieneinrichtung ein bestimmtes Getränkezubereitungsprogramm auszuwählen, um es anschließend zu aktivieren. Vorher sollte der Getränkeauslass auf die ausgewählte Getränkeart eingestellt werden. Oftmals unterbleibt dies ganz oder wird nachgeholt, was zum Verspritzen von Getränk führen kann. Bekannte Getränkewahlvorrichtungen sind Wählschalter, mit denen beispielsweise per Drehen eine Getränkeauswahl vorgenommen werden kann, indem ein Zeiger auf ein entsprechendes Symbol gerichtet wird. Alternativ dazu ist eine Anzahl an Tasten bekannt, wobei jede Taste einer Getränkeart zugeordnet ist. Bei Zubereitungseinrichtungen mit Bildschirm kann die Getränkeauswahl über ein sogenanntes Pull-Down-Menü oder durch "Scrollen" angezeigt und eine Getränkeart ausgewählt werden. Nach einer vorteilhaften Ausgestaltung der Erfindung kann die Heißgetränkezubereitungseinrichtung über eine mechanische und/oder elektrische Kopplung des Getränkeauslasses mit der Getränkewahlvorrichtung verfügen. Dadurch kann vorteilhafterweise die Einstellung des Getränkeauslasses auf die Zubereitung einer bestimmten Getränkeart mit der Auswahl dieser Getränkeart gekoppelt werden. Damit bestimmt die Stellung des Getränkeauslasses zugleich das ausgewählte Zubereitungsprogramm. Dadurch lassen sich eine separate Betätigungseinrichtung für die Getränkewahlvorrichtung und ein Bedienschritt des Benutzers zur Betätigung der Heißgetränkezubereitungseinrichtung einsparen. So erhält die erfindungsgemäße Heißgetränkezubreitungseinrichtung eine intuitive Bedienung, womit sie einen besonders hohen Bedienungskomfort bietet. Ist mit der Verstellung des Getränkeauslasses auch die entsprechende Einstellung des Abstands zwischen ihm und der Tassenaufstellfläche kombiniert, so lassen sich sogar drei Bedienungsschritte einer herkömmlichen Getränkezubreitungseinrichtung erfindungsgemäß in einen einzigen Schritt zusammenfassen.

Nach der Betätigung einer Getränkewahlvorrichtung auch einer herkömmlichen Heißgetränkezubereitungseinrichtung muss ihr per Bedienungseingabe noch der Startbefehl für den Zubereitungsvorgang vermittelt werden. Dafür sind separate oder mit der Getränkewahlvorrichtung kombinierte Starttasten bekannt. Nach einer weiteren vorteilhaften Ausgestaltung der Erfindung kann die Heißgetränkezubereitungseinrichtung über eine Ausbildung des Getränkeauslasses zugleich als Startschalter verfügen. Damit lässt sich wiederum ein separates Bedienelement einsparen und die Betätigung der Zubereitungseinrichtung vereinfachen. Denn der Benutzer braucht ihn nach der Einstellung des Getränkeauslasses lediglich erneut zu betätigen, um die Zubereitungseinrichtung zu aktivieren. Selbstverständlich sollte die Betätigung des Getränkeauslasses in der Funktion als Startschalter in einer anderen Weise als für die oben beschriebene Verstellung erfolgen. Ein translatorisch verstellbarer Getränkeauslass kann als Start-Schalter verdreht, ein rotatorisch verstellbarer Getränkeauslass translatorisch betätigt werden.

Alternativ oder zusätzlich kann der Getränkeauslass vorteilhafterweise auch als StoppSchalter ausgebildet sein, sofern das Zubereitungsprogramm der Getränkeart nicht selbsttätig stoppt, oder als Stopp-Schalter, der auch bei selbstabschaltendem Zubereitungsvorgang betätigt werden kann, um die Zubereitung vorzeitig zu beenden. Der Getränkeauslass kann dazu beispielsweise als Drucktaste ausgebildet sein, die nach einer Bedienung selbsttätig in ihren Ausgangszustand zurückkehrt. Ein translatorisch horizontal verstellbarer Getränkeauslass kann beispielsweise als vertikal abwärts zu betätigende Drucktaste in der Funktion als Start- und/oder Stopp-Schalter ausgebildet sein. Ein rotatorisch zu betätigender Getränkeauslass dagegen kann beispielsweise translatorisch nach links betätigt als Start-Schalter und nach rechts betätigt als Stopp-Schalter dienen. Dadurch lässt sich die intuitive und einhändige Bedienung der Zubereitungsreinrichtung vervollkommnen, weil nun die Auswahl der Getränkeart und so gut wie alle Einstellungen dafür ausschließlich am Getränkeauslass vorzunehmen sind.

Nach einer weiteren vorteilhaften Ausgestaltung der Erfindung kann die Heißgetränkezubereitungseinrichtung über eine Ausbildung des verdrehbaren Getränkeauslasses als axial betätigbare Taste verfügen. Der Getränkeauslass kann quasi als "push-button", also als Drucktaste, ausgebildet sein, die horizontal in der Richtung ihrer Drehachse zu betätigen ist. Als Drucktaste mit Rücksprung in ihre Ausgangsposition nach einer Betätigung kann sie jedenfalls als Start-Taste und gegebenenfalls auch als Stopp-Taste dienen. Alternativ kann zwischen der Startfunktion und der Stoppfunktion unterschieden werden, indem beispielsweise die Startfunktion durch eine Druckbetätigung des Getränkeauslasses aktiviert wird, und ein gegebenenfalls vorzeitiges Stoppen einer Zubereitung durch eine erneute Druckbetätigung oder einen Zug am Getränkeauslass in einer Gegenrichtung zur Druckbetätigung ausgelöst werden kann. Damit kann der Getränkeauslass als das nahezu einzige Betätigungsmittel der Heißgetränkezubereitungseinrichtung dienen, so dass sie nicht nur über eine vollkommen intuitive Bedienung verfügen kann, sondern auch ihr Design und ihr Bedienungskomfort nicht durch eine Vielzahl an Tasten und Betätigungseinrichtungen beeinträchtigt sind.

In anderen Worten beruht die Erfindung auf dem allgemeinen Gedanken, eine Getränke-Zubereitungseinrichtung mit einem Getränkeausgabe-Element zu versehen, welches an einer Außenseite eines Gehäuses der Getränke-Zubereitungseinrichtung angebracht ist und wenigstens zwei Auslassöffnungen aufweist, wobei ein Abstand der Auslassöffnungen relativ zum Gehäuseboden des Gehäuses durch Drehen des Getränkeausgabe-Elements verstellbar ist. Im Gegensatz dazu ist in herkömmlichen Getränke-Zubereitungseinrichtungen die Verstellbarkeit des Getränkeauslass-Elements derart realisiert, dass das Getränkeauslass-Element translatorisch verstellbar am Gehäuse angebracht ist. Das gemäß der vorliegenden Erfindung drehbar am Gehäuse angebrachte Getränkeauslass-Element ist gegenüber herkömmlichen Getränkeausgabe-Elementen technisch einfach zu realisieren, was sich günstig auf die Herstellungskosten der gesamten Zubereitungseinrichtung auswirkt. Mittels einer einfachen Drehbewegung des Getränkeausgabe-Elements relativ zum Gehäuse und einer damit verbundenen Verstellbarkeit des Abstands der wenigstens zwei Auslassöffnungen relativ zum Gehäuseboden kann die Position der Auslassöffnungen an die Behältnishöhe des zu befüllenden Behältnisses leicht angepasst werden. Dadurch wird sichergestellt, dass diejenige der wenigstens zwei Auslassöffnungen, durch welche das Getränk zum Befüllen des Behältnisses austritt, möglichst nahe am oberen Rand des zu befüllenden Behältnisses angeordnet werden kann.

In einer vorteilhaften Weiterbildung sind die wenigstens zwei Auslassöffnungen derart am Getränkeauslass-Element angeordnet, dass sie in einer Position, in welcher sie in Richtung des Gehäusebodens ausgerichtet sind, relativ zum Gehäuseboden jeweils einen unterschiedlichen Abstand aufweisen, so dass Behältnisse mit unterschiedlicher Behältnishöhe zwischen dem Gehäuseboden und dem Getränkeauslass-Element angeordnet werden können.

Zur komfortablen Platzierung eines Behältnisses, welches mit dem von der Getränke-Zubereitungseinrichtung zubereiteten Getränk befüllt werden soll, kann der Gehäuseboden als nach vorne vom Gehäuse abstehendes Tassenpodest zum Abstellen des Behältnisses ausgebildet sein. Das Getränkeauslass-Element kann an einer Vorderseite des Gehäuses angeordnet sein, so dass das auf dem Tassenpodest abgestellte Behältnis unterhalb des Getränkeauslass-Elements angeordnet ist und somit komfortabel mit Flüssigkeit befüllt werden kann.

In einer bevorzugten Ausführungsform ist das Getränkeauslass-Element mittels eines stiftartigen Befestigungselements am Gehäuse befestigt, durch welches eine Drehachse definiert ist, um welche das Getränkeauslass-Element relativ zum Gehäuse drehbar ist. Am Gehäuse kann eine komplementäre Aufnahmeöffnung zur Aufnahme des stiftartigen Befestigungselements vorgesehen sein. Dies erlaubt eine technisch einfach zu realisierende drehbare Befestigung des Getränkeauslass-Elements am Gehäuse.

In einer besonders bevorzugten Ausführungsform kann das Getränkeauslass-Element eine Stirnseite aufweisen, welche in einer axialen Richtung in eine Umfangsseite übergeht. Die Stirnseite ist bezüglich einer radialen Richtung asymmetrisch ausgebildet, wobei die wenigstens zwei Auslassöffnungen jeweils mit einem bezüglich der Drehachse unterschiedlichen radialen Abstand an der Umfangsseite des Getränkeauslass-Elements angeordnet sind. Durch Drehung des Getränkeauslass-Elements kann somit eine Änderung des Abstands der Aufnahmeöffnungen zum Gehäuseboden und somit zum oberen Rand eines am Gehäuseboden angeordneten und zu befüllenden Behältnisses erreicht werden.

In einer technisch besonders einfach zu realisierenden Ausführungsform kann das stiftartige Befestigungselement integral am Getränkeauslass-Element ausgeformt und das Getränkeauslass-Element lösbar am Gehäuse befestigt sein. Auf diese Weise lässt sich das Getränkeauslass-Element, beispielsweise zu Reinigungszwecken o.ä., auf einfache Weise vom Gehäuse entfernen und wieder an diesem anbringen.

Gemäß einer vorteilhaften Weiterbildung ist das stiftartige Befestigungselement exzentrisch am Getränkeauslass-Element angeordnet. Eine Drehung des Getränkeauslass-Elements um das eine Rotationsachse definierende Befestigungselement bewirkt auf diese Weise die gewünschte Verstellbarkeit der Position der Auslassöffnungen.

Gemäß einer vorteilhaften Weiterbildung kann das Getränkeauslass-Element zum Zwecke der besonders einfachen technischen Realisierung in der Art eines Nockenelements ausgebildet sein, so dass die Positionierung der Auslassöffnungen relativ zum Gehäuse durch die asymmetrische radiale Ausbildung des Nockenelements erzielt wird.

In einer besonders bevorzugten Ausführungsform kann die lösbare Befestigung des Getränkeauslass-Elements am Gehäuse mittels einer Einrasteinrichtung realisiert sein. Eine solche Einrasteinrichtung kann eine am Getränkeauslass-Element vorgesehene Aufnahmenut und eine am Gehäuse mit einem federelastischen Element vorgespannte Kugel umfassen, was eine einfache Montage bzw. Demontage des Getränkeauslass-Elements durch einen Benutzer erlaubt.

Besonders bevorzugt sind genau drei Auslassöffnungen am Getränkeauslass-Element vorgesehen. Auf diese Weise kann die Getränke-Zubereitungseinrichtung für die Befüllung von drei Behältnissen mit jeweils unterschiedlicher Behältnishöhe, beispielsweise einer Espresso-Tasse, einer Cappuccino-Tasse und einer Kaffeetasse optimiert werden.

Das Prinzip der Erfindung wird im Folgenden anhand einer Zeichnung beispielshalber noch näher erläutert. In der Zeichnung zeigen:
- Figur 1:: eine erfindungsgemäße Heißgetränkezubereitungseinrichtung in einer Zubereitungsposition für Espresso,
- Figur 2:: eine Zubereitungsposition für Kaffee,
- Figur 3:: eine Zubereitungsposition für Latte Macchiato.

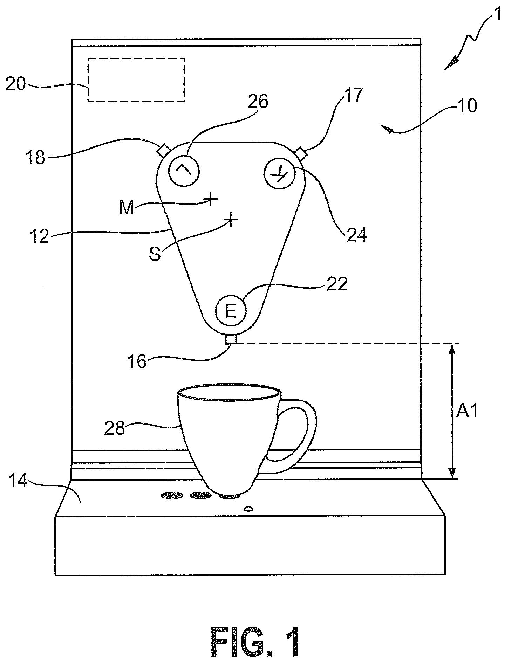

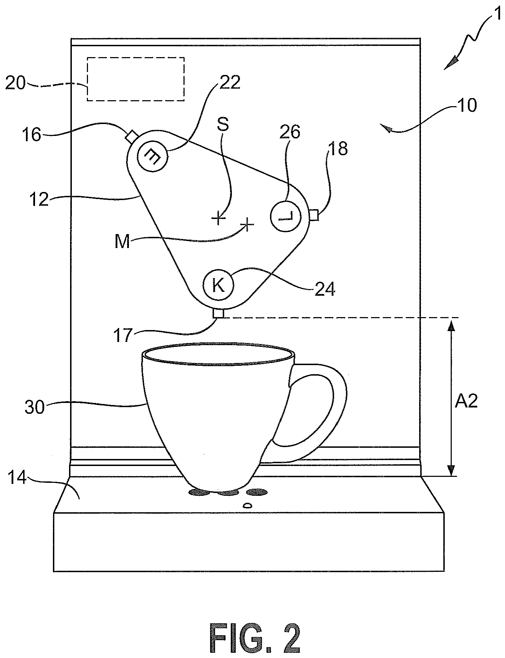

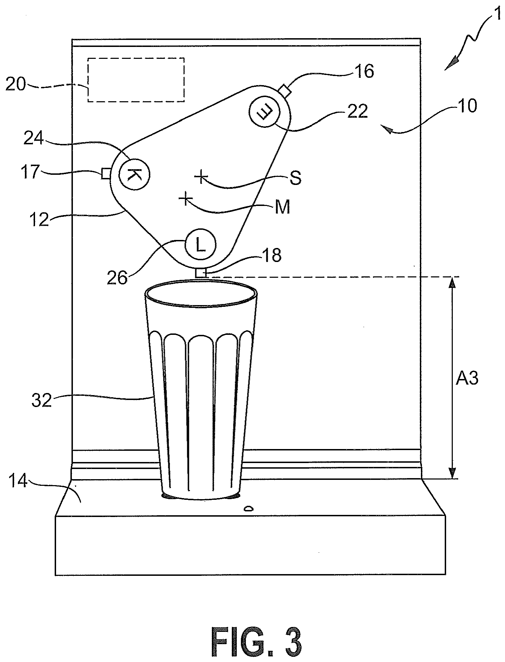

Die Figuren 1 bis 3 zeigen denselben Kaffeevollautomaten 1 als Beispiel einer Heißgetränkezubereitungseinrichtung in jeweils einer anderen Zubereitungsposition: In Figur 1 ist er für die Zubereitung eines Espresso vorbereitet, in Figur 2 ist die Zubereitung eines normale Kaffees und in Figur 3 die eines Latte Macchiato ausgewählt. Im Übrigen unterscheiden sich die Darstellungen der Figuren 1 bis 3 nicht.

Der Kaffeevollautomat 1 ist in einer Ansicht auf seine Frontfläche 10 dargestellt, die als einziges Element einen Getränkeauslass 12 trägt. Ihre unterseitige Begrenzung bildet eine Tassenaufstellfläche 14, die die gesamte Breite der Frontfläche 10 bzw. des Kaffeevollautomaten 1 einnimmt. Für die Zubereitung eines Heißgetränkes ist jedoch nur ein verhältnismäßig kleiner Abschnitt der Tassenaufstellfläche 14 unterhalb und etwa in der Breite des Getränkeauslasses 12 erforderlich.

Der Getränkeauslass 12 hat in Ansichtsrichtung die Form eines gleichschenkligen Dreiecks mit abgerundeten Ecken. An den Ecken befinden sich jeweils Getränkeausläufe 16, 17, 18. In Figur 1 steht der Getränkeauslass 12 bezüglich einer vertikalen Achse symmetrisch auf einer seiner "Ecken", so dass der Getränkeauslauf 16 abwärts auf die Tassenaufstellfläche 14 gerichtet ist. Er befindet sich damit in einer zubereitungsbereiten Position. Er weist von einem geometrischen Schwerpunkt S des dreieckförmigen Getränkeauslaufes 12 betrachtet radial nach außen und abwärts. Auch die übrigen Getränkeausläufe 17, 18 weisen vom Schwerpunkt S des Getränkeauslaufes 12 radial nach außen. Sie sind damit aber nicht auf die Tassenaufstellfläche 14, sondern schräg aufwärts gerichtet. In der dargestellten Position sind sie damit als für einen Zubereitungsvorgang inaktiv erkennbar.

Dem Getränkeauslauf 16 ist eine Markierung 22 auf dem Getränkeauslauf 12 zugeordnet, die ein "E" für die Getränkeart "Espresso" zeigt. Dem Getränkeauslauf 17 ist eine vergleichbare Markierung 24 für die Getränkeart "Kaffee" und dem Getränkeauslauf 18 eine Markierung 26 für "Latte Macchiato" zugeordnet. Die Markierung 22 in einer für den Benutzer des Kaffeevollautomaten 1 gewöhnlichen Leseposition symbolisiert dem Benutzer, dass die Getränkeart "Espresso" ausgewählt ist und dass sich der Getränkeauslauf 12 in einer dafür geeigneten Zubereitungsposition befindet. In der Zubereitungsposition "Espresso" nimmt der Getränkeauslauf 16 einen verhältnismäßig geringen Abstand A1 gegenüber der Tassenaufstellfläche 14 ein. Dadurch gelangt der zubereitete Espresso über eine verhältnismäßig geringe Fallhöhe in die üblicherweise kleine Espressotasse 28, ohne die Frontfläche 10 zu verspritzen oder neben die Espressotasse 28 zu tropfen.

Der Getränkeauslass 12 ist an dem Kaffeevollautomaten 1 um einen exzentrischen Drehpunkt M um eine auf die Frontfläche 10 senkrecht stehende und damit horizontal verlaufende Achse verdrehbar angebracht. Um statt eines Espresso einen Kaffee auszuwählen, verdreht der Benutzer den Getränkeauslauf 12 im Uhrzeigersinn, so dass die Markierung 24 normal lesbar ist, wie in Figur 2 dargestellt. Statt des Getränkeauslaufs 16 für Espresso ist nun der Getränkeauslauf 17 für Kaffee senkrecht abwärts auf die Tassenaufstellfläche 14 und in eine darauf abgestellte Kaffeetasse 30 gerichtet. Da der Getränkeauslass 12 nicht um seinen geometrischen Schwerpunkt S, sondern um seinen exzentrischen Drehpunkt M verdreht wird und er außerdem keine punktsymmetrische Gestalt oder Umrissform aufweist, hält der Getränkeauslauf 17 nun einen größeren Abstand A2 gegenüber der Tassenaufstellfläche 14 ein als der Getränkeauslauf 16 (vgl. Figur 1). Damit finden unter dem gemäß Figur 2 eingestellten Getränkeauslauf 12 größere Getränkegefäße als Espressotassen 28 (vgl. Figur 1) Platz, wie beispielsweise herkömmliche Kaffeetassen 30. Denn der radiale Abstand des Getränkeauslaufes 16 gegenüber dem Drehpunkt des Getränkeauslasses 12 ist größer als derjenige des Getränkeauslaufes 17 bzw. 18. Damit erfüllt die Verstellung des Getränkeauslasses 12 zugleich die Funktion einer Höhenverstellung bzw. Höhenanpassung gegenüber der Tassenaufstellfläche 14, so dass eine Höhenverstellung des Getränkeauslaufes 12 an sich bzw. diejenige der Tassenaufstellfläche 14, wie sie von herkömmlichen Heißgetränkezubereitungseinrichtungen bekannt sind, entfallen kann.

Will der Benutzer nun einen Latte Macchiato zubereiten, so verdreht er den Getränkeauslass 12 ausgehend von der Positionierung gemäß Figur 2 wiederum im Uhrzeigersinn, ausgehend von der Positionierung gemäß Figur 1 dagegen vorzugsweise gegen den Uhrzeigersinn, bis die Markierung 26 normal lesbar ist und der Getränkeauslauf 18 auf die Tassenaufstellfläche 14 abwärts gerichtet ist. Da der Getränkeauslauf 18 den geringsten radialen Abstand zum Drehpunkt M aufweist, bietet er den größten Abstand A3 von der Tassenaufstellfläche 14. Dadurch lassen sich hohe Latte Macchiato-Gläser 32 unter dem Getränkeauslass 12 abstellen.

Der Getränkeauslass 12 ist mit einer Getränkewahlvorrichtung 20 in der Weise gekoppelt, dass jede Stellung des Getränkeauslasses 12 gemäß den Figuren 1, 2 und 3 in eine Verarbeitungsinformation an den Kaffeevollautomaten 1 für die Zubereitung des jeweiligen Getränkes umgesetzt wird. Die Koppelung kann mechanisch ausgebildet sein, so dass die Verdrehung des Getränkeauslasses 12 jeweils mechanisch ein anderes Zubereitungsprogramm bestimmt. Alternativ kann die Koppelung elektrisch umgesetzt sein, so dass jede Stellung des Getränkeauslasses 12 ein anderes elektrisches Signal beispielsweise an eine Steuerungseinrichtung des Kaffeevollautomaten 1 sendet, das der Auswahl eines anderen Zubereitungsprogrammes entspricht. Damit kann ein separater Auswahlschalter für die Bestimmung einer Getränkeart entfallen.

Der Getränkeauslass 12 ist nicht nur um seinen Drehpunkt M verdrehbar ausgebildet, sondern lässt sich auch in axialer Richtung als Drucktaste betätigen. Damit kann ein Benutzer nach Auswahl einer Getränkeart und dem vorherigen oder nachfolgenden Positionieren eines geeigneten Getränkegefäßes auf der Tassenaufstellfläche 14 die Zubereitung des ausgewählten Getränks starten, indem er den Getränkeauslass 12 auf die Frontfläche 10 hin drückt. Nach dem vollständigen Eindrücken des Getränkeauslasses 12 springt er in seine Ursprungsposition zurück, in der er das gewählte Getränk in das bereit gestellte Getränkegefäß abgibt. Sollte das Volumen des ausgewählten Getränkegefäßes nicht ausreichen, kann der Benutzer durch ein erneutes Drücken des Getränkeauslasses 12 den Zubereitungsvorgang vorzeitig abbrechen bzw. stoppen. Ansonsten findet die Zubereitung des Getränkes in einer voreingestellten Menge statt. Neben der Getränkewahl und der Anpassung des Abstandes zwischen dem jeweiligen Getränkeauslauf 16, 17, 18 von der Tassenaufstellfläche 14 hat der Getränkeauslass 12 damit die zusätzliche, dritte Funktion einer Start-/Stopp-Taste, mit der die Getränkezubereitung aktiviert und gegebenenfalls vorzeitig beendet werden kann. Daher kann eine separate Taste auch für diese Funktion bzw. Funktionen entfallen. Auf diese Weise erhält der Kaffeevollautomat 1 eine sehr minimalistische Gestaltung, weil seine Frontfläche 10 lediglich den Getränkeauslass 12, sonst aber keine weiteren Bedienelemente trägt. Dies dient neben einer sehr intuitiven Bedienung auch einem eleganten, minimalistischen und übersichtlichen Design des Kaffeevollautomaten 1.

Da es sich bei den vorhergehenden, detailliert beschriebenen Kaffeevollautomaten um ein Ausführungsbeispiel handelt, kann er in üblicher Weise vom Fachmann in einem weiten Umfang modifiziert werden, ohne den Bereich der Erfindung zu verlassen. Insbesondere können auch die Anzahl, die konkreten Ausgestaltungen und Anordnungen des Getränkeauslasses oder der Getränkeausläufe in anderer Form als in der hier beschriebenen erfolgen. Ebenso kann der Getränkeauslass in einer anderen nichtrotationssymmetrischen bzw. asymmetrischen Form ausgestaltet werden, wenn dies aus Platzgründen bzw. designerischen Gründen notwendig ist. Insbesondere müssen beispielsweise die Getränkeausläufe nicht radial, sondern können auch axial am Getränkeauslass münden. Weiterhin schließt die Verwendung der unbestimmten Artikel "ein" bzw. "eine" nicht aus, dass die betreffenden Merkmale auch mehrfach bzw. mehrmals vorhanden sein können.

### Bezugszeichenliste

- 1: Kaffeevollautomat
- 10: Frontfläche
- 12: Getränkeauslass
- 14: Tassenaufstellfläche
- 16, 17, 18: Getränkeauslauf
- 20: Getränkewahlvorrichtung
- 22, 24, 26: Kennzeichnung
- 28: Espressotasse
- 30: Kaffeetasse
- 32: Latte-Macchiato-Glas
- (A1, A2, A3): Abstand des Auslaufs (16, 17, 18) von der Tassenaufstellfläche (14)

## Patentansprüche

1. Heißgetränkezubereitungseinrichtung für Haushaltszwecke, insbesondere Kaffeevollautomat, zur Zubereitung und Ausgabe unterschiedlicher Getränkearten, mit einer im Betrieb einem Benutzer zugewandten Frontfläche (10), mit einem Getränkeauslass (12) an der Frontfläche (10) zur Ausgabe zumindest einer Getränkekomponente und mit einer Tassenaufstellfläche (14) unter dem Getränkeauslass (12), wobei der Getränkeauslass (12) mindestens zwei Getränkeausläufe (16; 17; 18) für unterschiedliche Getränke umfasst und über der Tassenaufstellfläche (14) in mindestens zwei Positionen verstellbar ist, wobei sowohl die unterschiedlichen Positionen als auch die unterschiedlichen Getränkeausläufe (16; 17; 18) der Ausgabe jeweils unterschiedlicher Getränkearten zugeordnet sind, **dadurch gekennzeichnet, dass** dass der Getränkeauslass (12) um eine horizontale, senkrecht zur Frontfläche (10) verlaufende Achse (M) verdrehbar ist.

2. Heißgetränkezubereitungseinrichtung nach Anspruch 1, **gekennzeichnet durch** unterschiedliche Abstände (A1; A2; A3) der Getränkeausläufe (16; 17; 18) von der Tassenaufstellfläche (14) in den unterschiedlichen Positionen des Getränkeauslasses (12).

3. Heißgetränkezubereitungseinrichtung nach Anspruch 2, **gekennzeichnet durch** einen exzentrisch gelagerten Getränkeauslass (12).

4. Heißgetränkezubereitungseinrichtung nach einem der obigen Ansprüche, **gekennzeichnet durch** einen Getränkeauslauf (16) für Espresso, einen Getränkeauslauf (17) für Kaffee und einen Getränkeauslauf (18) für Latte Macchiato am Getränkeauslass (12).

5. Heißgetränkezubereitungseinrichtung nach einem der obigen Ansprüche mit einer Getränkewahlvorrichtung (20) zur Auswahl eines Getränks aus mehreren angebotenen Getränken, **gekennzeichnet durch** eine Kopplung des Getränkeauslasses (12) mit der Getränkewahlvorrichtung (20).

6. Heißgetränkezubereitungseinrichtung nach einem der obigen Ansprüche mit einen Start- und/oder Stoppschalter für eine einzelne Getränkezubereitung, **gekennzeichnet durch** eine Ausbildung des Getränkeauslasses (12) zugleich als Start- und/oder Stoppschalter.

7. Heißgetränkezubereitungseinrichtung nach Anspruch 6 mit einem rotatorisch verstellbaren Getränkeauslass (12), **gekennzeichnet durch** eine Ausbildung des Getränkeauslasses (12) als axial betätigbare Taste.

8. Heißgetränkezubereitungseinrichtung nach einem der obigen Ansprüche, **dadurch gekennzeichnet, dass** der Getränkeauslass (12) mittels eines stiftartigen Befestigungselements am Gehäuse bzw. an der Frontfläche (10) befestigt ist, durch welches eine Drehachse (D) definiert ist, um welche der Getränkeauslass (12) relativ zum Gehäuse bzw. zur Frontfläche (10) drehbar ist.

9. Heißgetränkezubereitungseinrichtung nach dem obigen Anspruch, **dadurch gekennzeichnet, dass** das stiftartige Befestigungselement integral am Getränkeauslass (12) ausgeformt ist und der Getränkeauslass (12) lösbar am Gehäuse bzw. an der Frontfläche (10) befestigt ist.

10. Heißgetränkezubereitungseinrichtung nach Anspruch 8 oder 9, **dadurch gekennzeichnet, dass** die lösbare Befestigung des Getränkeauslasses (12) am Gehäuse bzw. an der Frontfläche (10) mittels einer Einrasteinrichtung realisiert ist.

11. Heißgetränkezubereitungseinrichtung nach Anspruch 10, **dadurch gekennzeichnet, dass** die Einrasteinrichtung eine am Getränkeauslass (12) vorgesehene Aufnahmenut und eine am Gehäuse bzw. an der Frontfläche (10) mit einem federelastischen Element vorgespannte Kugel umfasst.

## Claims

1. Hot beverage preparation device for domestic purposes, in particular fully automatic coffee maker, for preparing and dispensing different types of beverage, with a front surface (10) which faces a user during operation, with a beverage outlet (12) on the front surface (10) for dispensing at least one beverage component and with a cup positioning surface (14) below the beverage outlet (12), wherein the beverage outlet (12) comprises at least two beverage dispensers (16; 17; 18) for different beverages and can be adjusted in at least two positions by way of the cup positioning surface (14), wherein both the different positions and also the different beverage dispensers (16; 17; 18) for the dispensing process are assigned to different types of beverage in each case, **characterised in that** the beverage outlet (12) can be turned about a horizontal axis (M) which runs at right angles to the front surface (10).

2. Hot beverage preparation device according to claim 1, **characterised by** different distances (A1; A2; A3) of the beverage dispensers (16; 17; 18) from the cup positioning surface (14) into the different positions of the beverage outlet (12).

3. Hot beverage preparation device according to claim 2, **characterised by** an eccentrically mounted beverage outlet (12).

4. Hot beverage preparation device according to one of the above claims, **characterised by** a beverage dispenser (16) for espresso, a beverage dispenser (17) for coffee and a beverage dispenser (18) for latte macchiato at the beverage outlet (12).

5. Hot beverage preparation device according to one of the above claims with a beverage selection apparatus (20) for selecting a beverage from a number of available beverages, **characterised by** a coupling of the beverage outlet (12) to the beverage selection device (20).

6. Hot beverage preparation device according to one of the above claims with a start and/or stop switch for a single beverage preparation, **characterised by** a formation of the beverage outlet (12) at the same time as the start and/or stop switch.

7. Hot beverage preparation device according to claim 6, with a rotationally adjustable beverage outlet (12), **characterised by** a formation of the beverage outlet (12) as an axially actuatable button.

8. Hot beverage preparation device according to one of the above claims, **characterised in that** the beverage outlet (12) is fastened by means of a pin-type fastening element to the housing or to the front surface (10), by means of which an axis of rotation (D), about which the beverage outlet (12) can be rotated relative to the housing or to the front surface (10), is defined.

9. Hot beverage preparation device according to the above claim, **characterised in that** the pin-type fastening element is moulded integrally on the beverage outlet (12) and the beverage outlet (12) is detachably fastened to the housing or to the front surface (10).

10. Hot beverage preparation device according to claim 8 or 9, **characterised in that** the detachable fastening of the beverage outlet (12) to the housing or to the front surface (10) is realised by means of a snap-fit device.

11. Hot beverage preparation device according to claim 10, **characterised in that** the snap-fit device comprises a receiving groove provided at the beverage outlet (12) and a ball prestressed with a flexible element on the housing or on the front surface (10).

## Revendications

1. Dispositif de préparation de boissons chaudes à des fins ménagères, en particulier machine à café intégralement automatique, pour la préparation et la distribution de différents types de boissons, avec une surface frontale (10) dirigée vers un utilisateur durant le fonctionnement, avec une sortie de boissons (12) sur la surface frontale (10) pour la distribution d'au moins un composant de boisson et avec une surface de dépose pour tasse (14) sous la sortie de boisson (12), dans lequel la sortie de boisson (12) englobe au moins deux écoulements de boisson (16 ; 17 ; 18) pour diverses boissons et est réglable selon au moins deux positions par-dessus la surface de dépose pour tasse (14), dans lequel tant les différentes positions que les différents écoulements de boisson (16 ; 17 ; 18) sont affectés à la distribution de types de boissons différents, **caractérisé en ce que** la sortie de boisson (12) se tord autour d'un axe (M) s'étendant à l'horizontale, perpendiculairement à la surface frontale (10).

2. Dispositif de préparation de boissons chaudes selon la revendication 1, **caractérisé par** des écartements différents (A1 ; A2 ; A3) des écoulements de boisson (16 ; 17 ; 18) par rapport à la surface de dépose pour tasse (14) dans les différentes positions de la sortie de boisson (12).

3. Dispositif de préparation de boissons chaudes selon la revendication 2, **caractérisé par** une sortie de boisson (12) logée de manière excentrique.

4. Dispositif de préparation de boissons chaudes selon l'une des revendications précédentes, **caractérisé par** un écoulement de boisson (16) pour l'expresso, un écoulement de boisson (17) pour le café et un écoulement de boisson (18) pour le latte macchiato sur la sortie de boisson (12).

5. Dispositif de préparation de boissons chaudes selon l'une des revendications précédentes, avec un dispositif de sélection de boisson (20) pour la sélection d'une boisson au départ de plusieurs boissons proposées, **caractérisé par** un couplage de la sortie de boisson (12) avec le dispositif de sélection de boisson (20).

6. Dispositif de préparation de boissons chaudes selon l'une des revendications précédentes, avec un interrupteur marche et/ou arrêt pour la préparation d'une seule boisson, **caractérisé par** une exécution de la sortie de boisson (12) en même temps comme interrupteur marche et/ou arrêt.

7. Dispositif de préparation de boissons chaudes selon la revendication 6 avec une sortie de boisson (12) déplaçable rotativement, **caractérisé par** une exécution de la sortie de boisson (12) comme bouton-poussoir à actionnement axial.

8. Dispositif de préparation de boissons chaudes selon l'une des revendications précédentes, **caractérisé en ce que** la sortie de boisson (12) est fixée à la carcasse resp. à la surface frontale (10) au moyen d'un élément de fixation en forme de broche, lequel définit un axe de rotation (D) autour duquel la sortie de boisson (12) est mobile en rotation par rapport à la carcasse resp. à la surface frontale (10).

9. Dispositif de préparation de boissons chaudes selon l'une des revendications précédentes, **caractérisé en ce que** l'élément de fixation en forme de broche est intégralement formée sur la sortie de boisson (12) et la sortie de boisson (12) est fixée de manière amovible à la carcasse resp. à la surface frontale (10).

10. Dispositif de préparation de boissons chaudes selon la revendication 8 ou 9, **caractérisé en ce que** la fixation amovible de la sortie de boisson (12) à la carcasse resp. à la surface frontale (10) est réalisée au moyen d'un dispositif d'encliquètement.

11. Dispositif de préparation de boissons chaudes selon la revendication 10, **caractérisé en ce que** le dispositif d'encliquètement englobe une rainure d'accueil prévue sur la sortie de boisson (12) et une bille précontrainte avec un élément à élasticité de ressort sur la carcasse resp. la surface frontale (10).
